# EUROPÄISCHE PATENTANMELDUNG

(11) **EP 4 012 278 A1**
(43) Veröffentlichungstag der Anmeldung: **15.06.2022**
(21) Anmeldenummer: 21212047.1
(22) Anmeldetag: 02.12.2021
(51) Int. Cl.: F24F 1/50, F24F 5/00

(54) **WÄRMEÜBERTRAGERVORRICHTUNG UND VERWENDUNG EINER WÄRMEÜBERTRAGERVORRICHTUNG**

(30) Priorität: 08.12.2020 DE 102020215477
(71) Anmelder: Robert Bosch GmbH, 70442 Stuttgart (DE)
(72) Erfinder: Kanters, Rene, 6822NB Arnhem (NL); Stuut, Patrick, 7271RG Borculo (NL); Mentink, Thomas, 7722 RD Dalfsen (NL); Veldhuijzen, Bernhard, 8281ME Genemuiden (NL); Plantagie, Ralph, 7339 CM Ugchelen (NL); Steentjes, Rudie, 7021 CJ Zelhem (NL)

(57) **Zusammenfassung**

Die Erfindung geht aus von einer Wärmeübertragervorrichtung (100), insbesondere eine in einer Außenumgebung (1) aufgestellte oder aufstellbare Wärmeübertragervorrichtung (100), zum Übertragen von Wärme zwischen einem Luftstrom (3) und einem Wärmeträgerfluidstrom, umfassend einen Luft/Fluid-Wärmeübertrager (102) und eine Luftleiteinrichtung (104) für eine Leitung des Luftstroms (3) durch den Luft/Fluid-Wärmeübertrager (102). Es wird vorgeschlagen, dass die Luftleiteinrichtung (104) zumindest ein Luftleitelement (106) umfasst, wobei das Luftleitelement (106) dazu ausgebildet ist, bei Umströmung des Luftleitelements (106) mit windbewegter Außenluft (2) eine aerodynamische, den Luftstrom (3) durch den Luft/Fluid-Wärmeübertrager (102) erzeugende und/oder vergrößernde Wirkung zu entfalten.

## Beschreibung

### Stand der Technik

Es ist bereits eine Wärmeübertragervorrichtung, insbesondere eine in einer Außenumgebung aufgestellte oder aufstellbare Wärmeübertragervorrichtung, zum Übertragen von Wärme zwischen einem Luftstrom und einem Wärmeträgerfluidstrom bekannt.

### Offenbarung der Erfindung

Die Erfindung geht aus von einer Wärmeübertragervorrichtung, insbesondere eine in einer Außenumgebung aufgestellte oder aufstellbare Wärmeübertragervorrichtung, zum Übertragen von Wärme zwischen einem Luftstrom und einem Wärmeträgerfluidstrom, umfassend einen Luft/Fluid-Wärmeübertrager und eine Luftleiteinrichtung für eine Leitung des Luftstroms durch den Luft/Fluid-Wärmeübertrager.

Es wird vorgeschlagen, dass die Luftleiteinrichtung zumindest ein Luftleitelement umfasst, wobei das Luftleitelement dazu ausgebildet ist, bei Umströmung des Luftleitelements mit windbewegter Außenluft eine aerodynamische, den Luftstrom durch den Lufl/Fluid-Wärmeübertrager erzeugende und/oder vergrößernde Wirkung zu entfalten.

Unter einer Wärmeübertragervorrichtung wird hier insbesondere eine Vorrichtung zur Übertragung von Wärme von einer Luft beziehungsweise einem Luftstrom auf ein Wärmeträgerfluid beziehungsweise einen Wärmeträgerfluidstrom oder - umgekehrt - von einem Wärmeträgerfluid beziehungsweise einem Wärmeträgerfluidstrom auf eine Luft beziehungsweise einen Luftstrom verstanden. Dabei wird insbesondere der Luftstrom als Wärmequelle für eine Heizanwendung (insbesondere Raumheizung und/oder Trinkwarmwasserbereitung) oder als Wärmesenke für eine Kühlanwendung (insbesondere Raumkühlung) genutzt. Insbesondere handelt es sich bei dem Luftstrom um einen der Außenumgebung entnommenen Luftstrom. Alternativ oder ergänzend kann es sich bei dem Luftstrom um einen einer Innenumgebung entnommenen Luftstrom handeln. Unter einer Innenumgebung wird insbesondere zumindest ein Raum eines Gebäudes verstanden. Unter einer Außenumgebung wird insbesondere der Außenraum außerhalb von Gebäuden unter freiem Himmel verstanden. In dieser Außenumgebung befindet sich die Außenluft, die natürlichen Witterungseinflüssen wie insbesondere Wind ausgesetzt ist. Unter einem Wärmeträgerfluid wird ein flüssiges und/oder gasförmiges Fluid verstanden, mittels dessen Wärme transportiert werden kann; dabei kann es sich insbesondere um ein Kühlfluid oder ein Kältemittel handeln. Der Luft/Fluid-Wärmeübertrager dient der Übertragung von Wärme zwischen dem Luftstrom einerseits und dem Wärmeträgerfluidstrom andererseits. Bei dem Luft/Fluid-Wärmeübertrager kann es sich beispielsweise um einen aus Rippenrohren aufgebauten Rohr-Wärmeübertrager handeln, bei dem die Luft außen um die Rohre und die Rohrrippen strömt und bei dem das Wärmeträgerfluid durch die Rohre fließt. Die Rippen dienen zur Vergrößerung der Rohroberfläche und gewährleisten eine gute Wärmeübertragung. Unter einer Luftleiteinrichtung wird hier insbesondere eine den Luftstrom leitende und/oder lenkende und/oder führende Einrichtung verstanden. Das Luftleitelement ist der Außenluft, insbesondere der von Wind bewegten Außenluft, ausgesetzt und entfaltet unter Einfluss des einwirkenden Winds eine aerodynamische Wirkung, insbesondere auf die Luftleiteinrichtung und/oder den Luftstrom in der Luftleiteinrichtung. Dadurch wird der Luftstrom durch den Luft/Fluid-Wärmeübertrager erzeugt und/oder ein bereits vorhandener Luftstrom vergrößert.

Damit ist eine gegenüber dem Stand der Technik verbesserte Wärmeübertragervorrichtung geschaffen.

Bei einer vorteilhaften Ausführung der Erfindung ist das Luftleitelement starr ausgebildet ist. Unter dem Begriff starr ist hier insbesondere auch ortsfest und/oder unbeweglich zu verstehen. Das Luftleitelement ist insbesondere starr an der Luftleiteinrichtung angeordnet. Das Luftleitelement weist insbesondere eine in sich starre und formstabile Geometrie auf.

Bei einer weiteren vorteilhaften Ausführung der Erfindung weist das Luftleitelement ein tragflügelartiges Profil auf. Unter einem tragflügelartigen Profil ist hier insbesondere ein im Wesentlichen flaches, zwei einander gegenüber liegende, leicht konvex gewölbte Hauptflächen aufweisendes Profil ähnlich dem eines Flugzeugflügels zu verstehen.

Bei einer weiteren vorteilhaften Ausführung der Erfindung ist das Luftleitelement außen an der Luftleiteinrichtung angeordnet und von der, insbesondere frei strömenden, windbewegten Außenluft direkt beaufschlagbar. Somit sind Strömungsverluste in der windbewegten, auf das Luftleitelement und/oder den Luftstrom einwirkenden Außenluft auszuschließen oder minimal, und kommt die Wirkung des Windes vollumfänglich der Vergrößerung des Luftstroms zugute.

Bei einer weiteren vorteilhaften Ausführung der Erfindung weist die Luftleiteinrichtung einen Luftströmungskanal zur Durchströmung mit dem Luftstrom sowie zumindest eine Eintrittsöffnung für einen Eintritt des Luftstroms in den Luftströmungskanal und zumindest eine Austrittsöffnung für einen Austritt des Luftstroms aus dem Luftströmungskanal auf. Das Luftleitelement ist bevorzugt im Bereich der Eintrittsöffnung und/oder der Austrittsöffnung angeordnet. Das Luftleitelement ist insbesondere dazu ausgebildet, bei Umströmung mit windbewegter Außenluft einen den Luftstrom durch den Luftströmungskanal erzeugenden und/oder vergrößernden Luftüberdruck an der Eintrittsöffnung und/oder Luftunterdruck an der Austrittsöffnung zu erzeugen.

Alternativ oder ergänzend ist das Luftleitelement dazu ausgebildet, bei Umströmung mit windbewegter Außenluft eine den Luftstrom durch den Luftströmungskanal erzeugende und/oder vergrößernde, gegenüber der Windgeschwindigkeit beschleunigte Außenluftbewegung hin zu der Eintrittsöffnung und/oder weg von der Austrittsöffnung zu erzeugen.

Der Luft/Fluid-Wärmeübertrager ist für eine effektive Durchströmung und Wärmeübertragung mit dem Luftstrom in und/oder an dem Luftströmungskanal angeordnet.

Bei einer weiteren vorteilhaften Ausführung der Erfindung weist der Luftströmungskanal eine im Wesentlichen prismatische oder zylindrische, hohle Form auf, wobei eine Hauptströmungsrichtung des Luftstroms in Richtung einer Prismalängsachse oder Zylinderlängsachse des Luftströmungskanals verläuft. Die Eintrittsöffnung für einen Eintritt des Luftstroms in den Luftströmungskanal in im Wesentlichen radialer Richtung ist an einer Mantelfläche des Luftströmungskanals ausgebildet, und/oder die Austrittsöffnung für einen Austritt des Luftstroms aus dem Luftströmungskanal in im Wesentlichen axialer Richtung ist an einer Stirnfläche des Luftströmungskanals ausgebildet. Zumindest abschnittsweise verläuft die Hauptströmung des Luftstroms entsprechend einer Rohrströmung in einem prismatischen oder zylindrischen Rohr. Unter einem prismatischen Rohr kann hier ein kantiges Rohr mit beispielsweise quadratischer, rechteckiger, sechseckiger oder achteckiger Stirnfläche (Grundfläche) verstanden werden. Unter einem zylindrischen Rohr kann hier ein rundes Rohr mit beispielsweise kreisrunder Stirnfläche (Grundfläche) verstanden werden. Unter der Mantelfläche ist insbesondere die Rohrwand zu verstehen. Darunter dass der Luftstrom in im Wesentlichen radialer Richtung in den Luftströmungskanal eintritt, ist zu verstehen, dass der Luftstrom - beispielsweise mit einer Winkelabweichung von zumindest ± 45° zur Prismalängsachse oder Zylinderlängsachse, beispielsweise einer Neigung eines Daches entsprechend - von der Seite kommend auf diese Längsachse zuströmt.

Bei einer weiteren vorteilhaften Ausführung der Erfindung ist der Luftströmungskanal von zumindest einem Wandelement nach außen begrenzt, wobei das Luftleitelement beabstandet von dem Wandelement und/oder von der Eintrittsöffnung und/oder Austrittsöffnung ausgebildet ist. Das mindestens eine Wandelement bildet eine Rohrwand des Luftströmungskanals und verschließt insbesondere die Mantelfläche des prismatischen bzw. zylindrischen Rohrs in Bezug auf den geleiteten Luftstrom. Das Luftleitelement kann stromaufwärts der Eintrittsöffnung und/oder stromabwärts der Austrittsöffnung angeordnet sein.

Dabei weist das Luftleitelement einen, insbesondere lichten, Abstand von dem Wandelement und/oder von der Eintrittsöffnung und/oder Austrittsöffnung auf.

Alternativ grenzt das Luftleitelement direkt an das Wandelement und/oder die Eintrittsöffnung und/oder Austrittsöffnung an.

Bei einer weiteren vorteilhaften Ausführung der Erfindung ist das Luftleitelement ringartig und/oder aus zwei oder mehreren Luftleitelement-Teilabschnitten zusammengesetzt umlaufend an der Eintrittsöffnung und/oder Austrittsöffnung ausgebildet. Das ringartige Luftleitelement kann entsprechend der Stirnfläche (Grundfläche) des prismatischen oder zylindrischen Rohrs beziehungsweise entsprechend der Form der Eintrittsöffnung und/oder Austrittsöffnung die Form eines kreisförmigen Rings oder eines eckigen Rings annehmen. Das Luftleitelement ist insbesondere im Nahbereich der Eintrittsöffnung und/oder Austrittsöffnung angeordnet.

Ein Anstellwinkel des Luftleitelements kann starr beziehungsfest im Betrieb unveränderlich vorgegeben sein. Alternativ kann ein Anstellwinkel des Luftleitelements auch verstellbar sein, beispielsweise mechanisch und/oder motorisch. Unter einem Anstellwinkel ist ein Winkel zwischen einer Profilsehne des Luftleitelements, insbesondere des Profils des Luftleitelements, und der Anströmrichtung der windbewegten Außenluft zu verstehen.

Bei einer weiteren vorteilhaften Ausführung der Erfindung weist das Profil des Luftleitelements eine Druckseite und eine Saugseite auf. Dabei ist die Saugseite der Austrittsöffnung zugewandt ist und/oder die Druckseite der Eintrittsöffnung zugewandt. Unter einer Druckseite ist hier jene Seite des Luftleitelements zu verstehen, an der sich bei Umströmung mit windbewegter Außenluft ein Luftüberdruck ausbildet. Unter einer Saugseite ist hier jene Seite des Luftleitelements zu verstehen, an der sich bei Umströmung mit windbewegter Außenluft ein Luftunterdruck ausbildet.

Bei einer weiteren vorteilhaften Ausführung der Erfindung umfasst die Wärmeübertragervorrichtung ein Luftgebläse zum Fördern des Luftstroms, wobei das Luftgebläse der Luftleiteinrichtung zugeordnet ist, insbesondere im oder am Luftströmungskanal angeordnet ist. Beispielsweise handelt es sich bei dem Luftgebläse um ein im Luftströmungskanal angeordnetes Axialgebläse. Zumindest bei Betrieb der Wärmeübertragervorrichtung in windstillen oder windarmen Zeiten, wenn also aufgrund einer ausbleibenden oder reduzierten Windbewegung der Außenluft keine oder nur eine geringe windinduzierte Durchströmung der Luftleiteinrichtung und/oder des Luftströmungskanals erfolgt, kann das Luftgebläse eine mechanisch induzierte Durchströmung der Luftleiteinrichtung und/oder des Luftströmungskanals sicherstellen. Auch kann im Betrieb der Wärmeübertragervorrichtung ein Betrieb des Luftgebläses regelmäßig vorgesehen sein, wobei die windinduzierte Durchströmung die gebläseinduzierte Durchströmung unterstützt und so den Energieverbrauch für den Betrieb des Luftgebläses reduzieren helfen kann.

Die Erfindung betrifft auch eine Verwendung der Wärmeübertragervorrichtung als Außeneinheit einer Wärmepumpe oder einer Klimaanlage. Mittels der Außeneinheit können eine Wärmepumpe oder eine Klimaanlage im Fall einer Heizanwendung Niedertemperaturwärme aus dem Luftstrom auf das Wärmeträgerfluid übertragen, oder können im Fall einer Kühlanwendung Wärme vom Wärmeträgerfluid an den Luftstrom abgeben. Insbesondere wird der Luftstrom aus der Außenumgebung durch die Eintrittsöffnung in die Luftleiteinrichtung angesaugt und nach Durchströmung des Lufl/Fluid-Wärmeübertragers durch die Austrittsöffnung wieder in die Außenumgebung ausgeblasen.

Bei einer vorteilhaften Ausführung dieser Erfindung, insbesondere in betriebsbereiter Aufstellung der Wärmeübertragervorrichtung, ist die Wärmeübertragervorrichtung auf einem Dach oder an einer Fassade eines Gebäudes angeordnet und einer windbewegten Außenluft ausgesetzt oder aussetzbar.

Alternativ steht die Wärmeübertragervorrichtung auf dem Erdboden, neben dem Gebäude, auf einem Vorplatz eines Gebäudes, in einem Garten, und ist dort einer windbewegten Außenluft ausgesetzt oder aussetzbar.

Bei einer weiteren vorteilhaften Ausführung dieser Erfindung, insbesondere in betriebsbereiter Aufstellung der Wärmeübertragervorrichtung, ist die Austrittsöffnung für einen Austritt des Luftstroms aus dem Luftströmungskanal, insbesondere im Wesentlichen senkrecht, nach oben gerichtet. Unter dem Begriff nach oben gerichtet kann hier insbesondere eine zulässige Winkelabweichung zur Senkrechten von maximal 45° verstanden werden. Unter dem Begriff im Wesentlichen senkrecht kann hier insbesondere genau senkrecht oder eine zulässige Winkelabweichung zur Senkrechten von maximal 30° verstanden werden. Durch diese Ausrichtung können der austretende Luftstrom, mit dem Betrieb verbundene Betriebsgeräusche und damit einhergehende Störungen von der genutzten und/oder bewohnten Umgebung ferngehalten werden.

### Zeichnung

Weitere Ausgestaltungen und Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen:
- Figur 1: eine Wärmeübertragervorrichtung in einer Seitenansicht,
- Figur 2: ein ringförmiges Luftleitelement in einer Draufsicht.

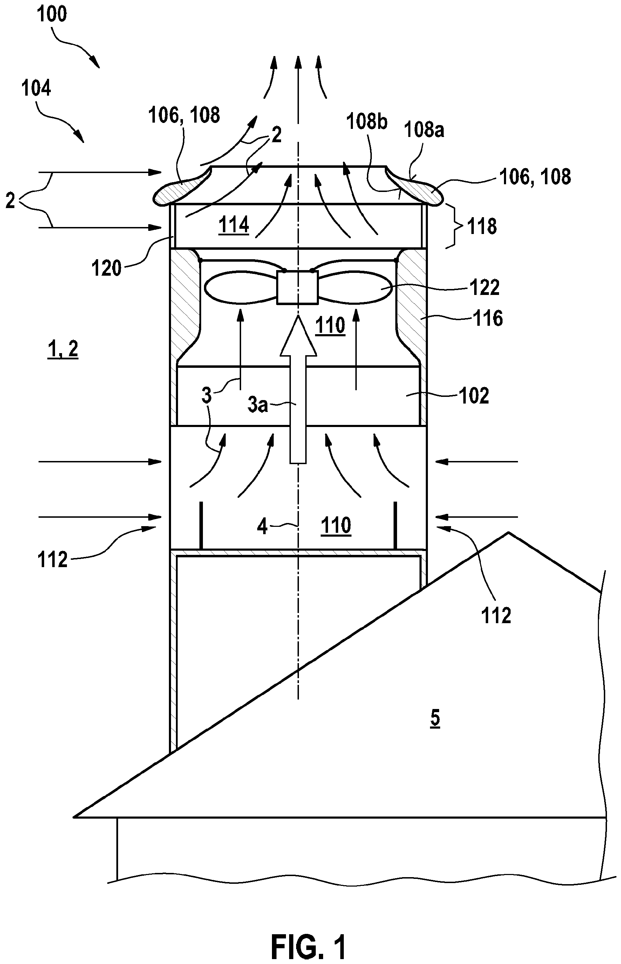

Figur 1 zeigt schematisch und nicht maßstabsgetreu in einer Seitenansicht im Längsschnitt eine Wärmeübertragervorrichtung 100, insbesondere eine in einer Außenumgebung 1 aufgestellte Wärmeübertragervorrichtung 100, zum Übertragen von Wärme zwischen einem einer Außenluft 2 entnommenen Luftstrom 3 und einem Wärmeträgerfluidstrom (nicht dargestellt), umfassend einen Luft/Fluid-Wärmeübertrager 102 und eine Luftleiteinrichtung 104 für eine Leitung des Luftstroms 3 durch den Luft/Fluid-Wärmeübertrager 102. Die Luftleiteinrichtung 104 umfasst ein Luftleitelement 106, das dazu ausgebildet ist, bei Umströmung des Luftleitelements 106 mit windbewegter Außenluft 2 eine aerodynamische, den Luftstrom 3 durch den Luft/Fluid-Wärmeübertrager 102 erzeugende und/oder vergrößernde Wirkung zu entfalten. Das Luftleitelement 106 ist starr ausgebildet und weist ein tragflügelartiges Profil 108 auf. Das Luftleitelement 106 ist, insbesondere starr, außen an der Luftleiteinrichtung 104 angeordnet und von der hier frei strömenden, windbewegten Außenluft 2 direkt beaufschlagt. Die Luftleiteinrichtung 104 weist einen Luftströmungskanal 110 zur Durchströmung mit dem Luftstrom 3 auf. Der Luftströmungskanal 110 weist eine im Wesentlichen prismatische oder zylindrische, hohle Form auf. Die Luftleiteinrichtung 104 weist zumindest eine Eintrittsöffnung 112 für einen Eintritt des Luftstroms 3 in den Luftströmungskanal 110 und eine Austrittsöffnung 114 für einen Austritt des Luftstroms 3 aus dem Luftströmungskanal 110 auf. Das Luftleitelement 106 ist im Bereich der Austrittsöffnung 114 angeordnet. Das Luftleitelement 106 ist dazu ausgebildet, bei Umströmung mit windbewegter Außenluft 2 einen den Luftstrom 3 durch den Luftströmungskanal 110 erzeugenden und/oder vergrößernden Luftunterdruck an der Austrittsöffnung 114 zu erzeugen. Der Luft/Fluid-Wärmeübertrager 102 für eine Wärmeübertragung mit dem Luftstrom 3 ist in dem Luftströmungskanal 110 angeordnet. Der Luftströmungskanal 110 weist eine im Wesentlichen prismatische oder zylindrische, hohle Form auf. Eine Hauptströmungsrichtung 3a des Luftstroms 3 verläuft in Richtung einer Prismalängsachse 4 oder Zylinderlängsachse 4 des Luftströmungskanals 110. Die Eintrittsöffnung 112 für einen Eintritt des Luftstroms 3 in den Luftströmungskanal 110 in im Wesentlichen radialer Richtung (radial zur Längsachse 4) ist an einer Mantelfläche des Luftströmungskanals 110 ausgebildet. Die Austrittsöffnung 114 für einen Austritt des Luftstroms 3 aus dem Luftströmungskanal 110 in im Wesentlichen axialer Richtung (parallel zur Längsachse 4) ist an einer Stirnfläche des Luftströmungskanals 110 ausgebildet. Der Luftströmungskanal 110 ist von zumindest einem Wandelement 116 begrenzt. Das Luftleitelement 106 ist mittels eines Spalts 118 beabstandet von dem Wandelement 116 und/oder der Austrittsöffnung 114 ausgebildet und in Richtung des Luftstroms (3) stromabwärts der Austrittsöffnung 114 angeordnet. Das Luftleitelement 106 wird von Streben 120 gehalten, die an der Wärmeübertragervorrichtung 100 angeordnet sind und ausreichend freie Durchströmfläche für die windbewegte Außenluft lassen. Die windbewegte Außenluft 2 kann durch den Spalt 118 zwischen Luftleitelement 106, Wandelement 116 und Austrittsöffnung 114 hindurchströmen und seine aerodynamische Wirkung entfalten. Das Luftleitelement 106 liegt insbesondere der Austrittsöffnung 114 gegenüber. Das Luftleitelement 106 ist insbesondere ringartig umlaufend im Bereich der Austrittsöffnung 114 ausgebildet. Ein offener Durchtritt in der Mitte des ringartigen Luftleitelements 106 liegt insbesondere in einer Flucht mit der Längsachse 4. Eine Hauptrotationsachse des kreisringartigen Luftleitelements 106 deckt sich insbesondere im Wesentlichen mit der Längsachse 4.

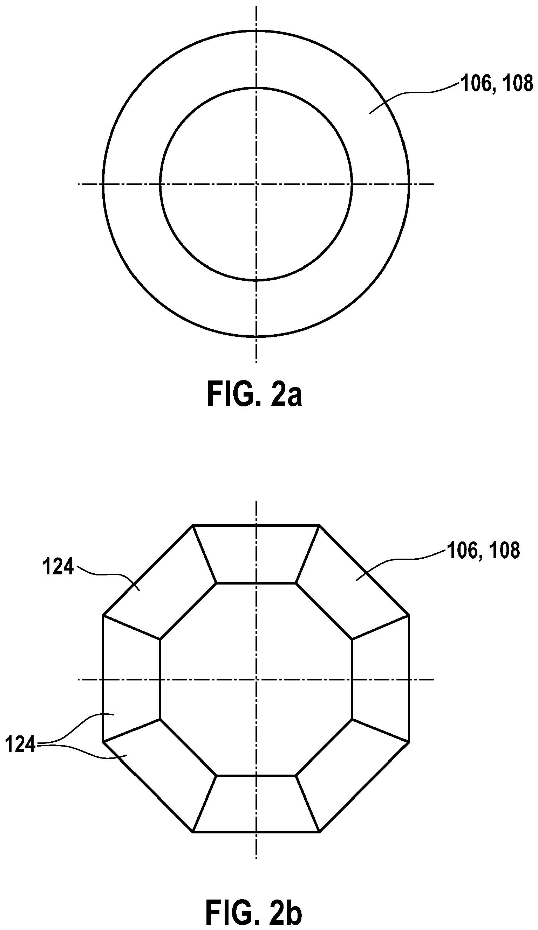

Figur 2 verdeutlicht die Ringform des Luftleitelements 106 in einer um 90° zur Seitenansicht der Figur 1 gedrehten Draufsicht. Figur 2a zeigt ein Luftleitelement 106 mit kreisrunder Ringform, beispielsweise entsprechend eines zylinderförmigen Luftströmungskanals 110 gewählt. Figur 2b zeigt ein Luftleitelement 106 mit achteckiger Ringform, beispielsweise entsprechend eines prismaförmigen Luftströmungskanals 110 gewählt. Das achteckige Luftleitelement 106 ist aus acht Luftleitelement-Teilabschnitten 124 zusammengesetzt.

Das Profil 108 des Luftleitelements 106 weist eine Druckseite 108a und eine Saugseite 108b auf. Die Saugseite 108b ist der Austrittsöffnung 114 zugewandt. Die auf den aus der Austrittsöffnung 114 austretenden Luftstrom 3 einwirkende Saugwirkung erfolgt aufgrund einer Umströmung des Luftleitelements 106 mit windbewegter Außenluft 2. Die Wärmeübertragervorrichtung 100 umfasst ein Axialluftgebläse 122 zum mechanischen Fördern des Luftstroms 3. Das Luftgebläse 122 ist der Luftleiteinrichtung 104 zugeordnet und im Luftströmungskanal 110 angeordnet. Die Wärmeübertragervorrichtung 100 kann vorteilhafterweise als Außeneinheit einer Wärmepumpe oder einer Klimaanlage verwendet werden. In diesem Fall wird der Lufl/Fluid-Wärmeübertrager 102 auf seiner Fluidseite von einem Kältemittel (nicht dargestellt) durchströmt. Wie in der hier schematisch dargestellten, betriebsbereiten Aufstellung kann die Wärmeübertragervorrichtung 100 auf einem Satteldach 5 eines Gebäudes aufgestellt und einer windbewegten Außenluft 2 ausgesetzt sein. Gerade auf Dächern 5, insbesondere Satteldächern 5, kommt es zu schnelleren Luftbewegungen oder Windbewegungen in der Außenluft 2, die der hier genutzten aerodynamischen Wirkung Nachdruck verleihen. Die Austrittsöffnung 114 für einen Austritt des Luftstroms 3 aus dem Luftströmungskanal 110 ist im Wesentlichen senkrecht nach oben gerichtet, wodurch der austretende Luftstrom (3) und damit einhergehende Betriebsgeräusche (Strömungsgeräusche, Motorgeräusche) aus dem üblichen Aufenthaltsbereich von anwesenden Personen weggerichtet sind.

## Patentansprüche

1. Wärmeübertragervorrichtung (100), insbesondere eine in einer Außenumgebung (1) aufgestellte oder aufstellbare Wärmeübertragervorrichtung (100), zum Übertragen von Wärme zwischen einem Luftstrom (3) und einem Wärmeträgerfluidstrom, umfassend einen Luft/Fluid-Wärmeübertrager (102) und eine Luftleiteinrichtung (104) für eine Leitung des Luftstroms (3) durch den Lufl/Fluid-Wärmeübertrager (102), **dadurch gekennzeichnet, dass** die Luftleiteinrichtung (104) zumindest ein Luftleitelement (106) umfasst, wobei das Luftleitelement (106) dazu ausgebildet ist, bei Umströmung des Luftleitelements (106) mit windbewegter Außenluft (2) eine aerodynamische, den Luftstrom (3) durch den Luft/Fluid-Wärmeübertrager (102) erzeugende und/oder vergrößernde Wirkung zu entfalten.

2. Wärmeübertragervorrichtung (100) nach Anspruch 1,
wobei das Luftleitelement (106) starr ausgebildet ist.

3. Wärmeübertragervorrichtung (100) nach Anspruch 1 oder 2,
wobei das Luftleitelement (106) ein tragflügelartiges Profil (108) aufweist.

4. Wärmeübertragervorrichtung (100) nach einem der vorhergehenden Ansprüche,
wobei das Luftleitelement (106) außen an der Luftleiteinrichtung (104) angeordnet und von der, insbesondere frei strömenden, windbewegten Außenluft (2) direkt beaufschlagbar ist.

5. Wärmeübertragervorrichtung (100) nach einem der vorhergehenden Ansprüche,
• wobei die Luftleiteinrichtung (104) einen Luftströmungskanal (110) zur Durchströmung mit dem Luftstrom (3) aufweist,
• wobei die Luftleiteinrichtung (104) zumindest eine Eintrittsöffnung (112) für einen Eintritt des Luftstroms (3) in den Luftströmungskanal (110) und zumindest eine Austrittsöffnung (114) für einen Austritt des Luftstroms (3) aus dem Luftströmungskanal (110) aufweist,
• wobei das Luftleitelement (106) im Bereich der Eintrittsöffnung (112) und/oder der Austrittsöffnung (114) angeordnet ist,
• wobei das Luftleitelement (106) insbesondere ausgebildet ist, bei Umströmung mit windbewegter Außenluft (2) einen den Luftstrom (3) durch den Luftströmungskanal (110) erzeugenden und/oder vergrößernden Luftüberdruck an der Eintrittsöffnung (112) und/oder Luftunterdruck an der Austrittsöffnung (114) zu erzeugen.

6. Wärmeübertragervorrichtung (100) nach einem der vorhergehenden Ansprüche,
• wobei der Luftströmungskanal (110) eine im Wesentlichen prismatische oder zylindrische, hohle Form aufweist,
• wobei eine Hauptströmungsrichtung (3a) des Luftstroms (3) in Richtung einer Prismalängsachse (4) oder Zylinderlängsachse (4) des Luftströmungskanals (110) verläuft,
• wobei die Eintrittsöffnung (112) für einen Eintritt des Luftstroms (3) in den Luftströmungskanal (110) in im Wesentlichen radialer Richtung an einer Mantelfläche des Luftströmungskanals (110) ausgebildet ist, und/oder die Austrittsöffnung (114) für einen Austritt des Luftstroms (3) aus dem Luftströmungskanal (110) in im Wesentlichen axialer Richtung an einer Stirnfläche des Luftströmungskanals (110) ausgebildet ist.

7. Wärmeübertragervorrichtung (100) nach einem der vorhergehenden Ansprüche,
wobei der Luftströmungskanal (110) von zumindest einem Wandelement (116) begrenzt ist, wobei das Luftleitelement (106) beabstandet von dem Wandelement (116) und/oder von der Eintrittsöffnung (112) und/oder Austrittsöffnung (114) ausgebildet ist.

8. Wärmeübertragervorrichtung (100) nach einem der vorhergehenden Ansprüche,
wobei das Luftleitelement (106) ringartig und/oder aus zwei oder mehreren Luftleitelement-Teilabschnitten zusammengesetzt umlaufend an der Eintrittsöffnung (112) und/oder Austrittsöffnung (114) ausgebildet ist.

9. Wärmeübertragervorrichtung (100) nach einem der vorhergehenden Ansprüche,
wobei das Profil (108) des Luftleitelements (106) eine Druckseite (108a) und eine Saugseite (108b) aufweist,
• wobei die Saugseite (108b) der Austrittsöffnung (114) zugewandt ist und/oder
• wobei die Druckseite (108a) der Eintrittsöffnung (112) zugewandt ist.

10. Wärmeübertragervorrichtung (100) nach einem der vorhergehenden Ansprüche,
umfassend ein Luftgebläse (122) zum, insbesondere mechanischen, Fördern des Luftstroms (3), wobei das Luftgebläse (122) der Luftleiteinrichtung (104) zugeordnet ist, insbesondere im oder am Luftströmungskanal (110) angeordnet ist.

11. Verwendung einer Wärmeübertragervorrichtung (100) nach einem der vorhergehenden Ansprüche als Außeneinheit einer Wärmepumpe oder einer Klimaanlage.

12. Verwendung nach Anspruch 11,
wobei die Wärmeübertragervorrichtung (100), insbesondere in betriebsbereiter Aufstellung, auf einem Dach (5) oder an einer Fassade eines Gebäudes angeordnet und einer windbewegten Außenluft (2) ausgesetzt oder aussetzbar ist.

13. Verwendung nach einem der Ansprüche 11 oder 12,
wobei, insbesondere in betriebsbereiter Aufstellung der Wärmeübertragervorrichtung (100), die Austrittsöffnung (114) für einen Austritt des Luftstroms (3) aus dem Luftströmungskanal (110), insbesondere im Wesentlichen senkrecht, nach oben gerichtet ist.
